# FASCICULE DE BREVET EUROPEEN

(11) **EP 4 103 548 B1**
(45) Date de publication et mention de la délivrance du brevet: **08.11.2023**
(21) Numéro de dépôt: 22711581.3
(22) Date de dépôt: 02.03.2022
(51) Int. Cl.: C07C 407/00, C08F 2/30, C08F 4/38, C08F 14/06, C08F 4/32, C08F 4/30, C08F 4/34

(54) **COMPOSITION COMPRENANT AU MOINS UN PEROXYDE ORGANIQUE, AU MOINS UN ÉMULSIFIANT, ET DE L'EAU OXYGÉNÉE**
ZUSAMMENSETZUNG MIT MINDESTENS EINEM ORGANISCHEN PEROXID, MINDESTENS EINEM EMULGATOR UND WASSERSTOFFPEROXID
COMPOSITION COMPRISING AT LEAST ONE ORGANIC PEROXIDE, AT LEAST ONE EMULSIFIER, AND HYDROGEN PEROXIDE

(30) Priorité: 02.03.2021 FR 2102027
(43) Date de publication de la demande: 21.12.2022
(60) Demande divisionnaire: 23200572.8
(73) Titulaire: ARKEMA FRANCE, 92700 Colombes (FR)
(72) Inventeur: BRANDHORST, Markus, 69491 Pierre-Benite CEDEX (FR)
(74) Mandataire: Arkema Patent
(86) Numéro de dépôt international: PCT/FR2022/050373
(87) Numéro de publication internationale: WO 2022/185011

(56) Documents cités:
- WO-A1-2012/080646
- WO-A1-2014/044961
- FR-A1- 2 253 760
- RU-C1- 2 087 469

## Description

La présente invention concerne une composition comprenant au moins un peroxyde organique, au moins un agent émulsifiant, de l'eau oxygénée et de l'eau.

L'invention se rapporte également à l'utilisation d'une composition telle que définie ci-avant pour la polymérisation ou la copolymérisation d'un ou plusieurs monomères éthyléniquement insaturés, de préférence un ou plusieurs monomères éthyléniquement insaturés halogénés, plus préférentiellement le chlorure de vinyle.

La présente divulgation a aussi trait à un polymère vinylique halogéné obtenu par polymérisation ou copolymérisation d'au moins un monomère éthyléniquement insaturé halogéné en présence d'au moins une composition telle que définie précédemment.

Les peroxydes organiques, sous forme liquide ou solide, sont couramment utilisés en tant qu'amorceurs de polymérisation de monomères à insaturation éthyléniques pour la synthèse de différents types de polymères. Les peroxydes organiques peuvent être des peroxydicarbonates, des peroxyesters ou des peroxydes de diacyle, des peroxykétals, des monoperoxycarbonates ou des peroxydes de dialkyle.

Toutefois, leur mise en oeuvre pose fréquemment un certain nombre de problèmes. En effet, les peroxydes organiques constituent le plus souvent des espèces fortement instables car elles se décomposent relativement aisément sous l'action d'un faible apport de chaleur, d'énergie mécanique (friction ou choc) ou de contaminants incompatibles. Ainsi, en cas d'élévation incontrôlée de la température de stockage, certains peroxydes organiques peuvent subir une décomposition exothermique autoaccélérée susceptible d'entraîner des explosions violentes et/ou des incendies plus ou moins graves. En outre, dans ces conditions, certains de ces peroxydes organiques peuvent libérer des vapeurs combustibles pouvant réagir avec toute source d'ignition ce qui peut augmenter, voire accélérer, de manière drastique les risques d'explosion violente. Il en résulte qu'il est important de prendre des mesures de précautions adéquates en termes de sécurité lors du stockage et du transport des peroxydes organiques.

Afin de pallier à ces inconvénients, les peroxydes organiques sont notamment conditionnés sous la forme d'émulsions aqueuses à base d'antigels. Ainsi la présence d'eau permet à la fois d'absorber et de dissiper l'énergie générée en cas d'éventuels décompositions exothermiques des peroxydes organiques tandis que l'antigel a pour rôle de maintenir l'émulsion sous forme liquide, à des températures bien inférieures à 0°C, par exemple à des températures inférieures à -10°C, voire généralement inférieures à -15°C, ce qui permet de prévenir et/ou de limiter les risques d'une décomposition exothermique involontaire des peroxydes organiques au cours des opérations de stockage et de transport.

Les émulsions aqueuses contiennent généralement en outre au moins un agent émulsifiant ayant l'avantage d'abaisser la tension interfaciale entre la phase aqueuse et le peroxyde organique afin de faciliter sa dispersion sous forme de gouttelettes et de maintenir la taille de ces dernières dans le temps. Ainsi le rôle de l'agent émulsifiant est de stabiliser les gouttelettes de peroxyde dans la phase aqueuse. En effet, au cours du temps, les gouttelettes de peroxyde peuvent s'agglomérer entre elles provoquant une augmentation de leur taille moyenne et de leur taille maximale ce qui peut conduire, dans certains cas, à une séparation de phase totale ou partielle et, par conséquent, à une déstabilisation globale de l'émulsion.

Par ailleurs, outre ces considérations de sécurité dues à ce phénomène de déstabilisation, l'utilisation d'émulsions aqueuses de peroxyde organique non homogènes en tant qu'initiateur de polymérisation dans une émulsion ou suspension de monomères à insaturation éthylénique peut aussi engendrer des points d'hétérogénéité au sein du produit polymérique final. Ces hétérogénéités se traduisent généralement par la présence de particules de grains compacts qui sont des particules de polymères mal gélifiées lors de la mise en oeuvre à l'état fondu (phénomène appelé « fish-eyes » en anglais ; grains durs). Or la présence des grains durs opacifie le matériau obtenu ce qui va impacter sa transparence, qui peut revêtir un critère primordial en fonction des applications considérées, notamment dans des applications médicales, et/ou ses propriétés mécaniques.

Au vu de ce qui précède, les émulsions aqueuses de peroxyde organique doivent donc être stables pour des questions de sécurité non seulement au cours de leur production mais également lors d'une période relativement longue correspondant à leur transport et à leur stockage avant d'être utilisées en tant qu'initiateurs de polymérisation ainsi que pour des raisons liées à la qualité du produit obtenu.

Les émulsions aqueuses de peroxydes organiques comprennent généralement, à titre d'agents antigels, un ou plusieurs alcools solubles dans l'eau à température ambiante ayant un faible poids moléculaire, tels que le méthanol ou l'éthanol, notamment le méthanol. La quantité de l'agent antigel nécessaire pour assurer une émulsion liquide à une température donnée inférieure à 0°C dépend de sa masse moléculaire. La quantité de méthanol nécessaire est donc inférieure à celle de l'éthanol. En même temps, la volatilité des alcools diminue avec la masse moléculaire. Afin de diminuer le risque lié au point d'éclair de l'émulsion, il faudra choisir un alcool avec une plus grande masse moléculaire. Pour maintenir le point de fusion de l'émulsion à la même température, il faut significativement augmenter la quantité de l'alcool dans la phase aqueuse, ce qui induit des problèmes de stabilité de l'émulsion et augmente la quantité de molécules organiques se trouvant dans les effluents du procédé de polymérisation. De plus, de tels antigels ont l'inconvénient d'être volatils et de générer des composés organiques volatils (COV) qui peuvent s'avérer être nocifs pour la santé des opérateurs, notamment au cours des différentes étapes de manipulation des émulsions aqueuses de peroxydes organiques mises en oeuvre pour la synthèse de polymères obtenus à partir d'un ou plusieurs monomères à insaturation éthylénique. En d'autres termes, la présence de ces antigels peut également poser des problèmes de sécurité sanitaires lors de la manipulation des émulsions aqueuses de peroxydes organiques. Le document WO 2014/044961 A1 décrit une composition d'émulsion aqueuse de peroxyde organique sans agent colloïde protecteur, comprenant un agent antigel et un agent émulsifiant qui consiste en un tensioactif non ionique.

Ainsi l'un des objectifs de la présente invention est de proposer une composition sous forme d'émulsion aqueuse de peroxyde organique stable et homogène dans le temps, destinée à être utilisée en tant qu'amorceurs de polymérisation, qui ne présente pas les inconvénients précédemment décrits en matière de sécurité et de qualité du produit obtenu.

En d'autres termes, l'un des buts de la présente invention est de proposer une composition à base de peroxyde organique qui pose moins de problèmes en termes de sécurité, en particulier sanitaires, pour les opérateurs que les émulsions aqueuses de peroxydes organiques habituellement mises en oeuvre pour la synthèse de polymères obtenus à partir de monomères à insaturation éthylénique tout étant capable d'être stable et homogène dans le temps et ne présentant qu'une quantité réduite de molécules organiques dans la phase aqueuse.

La présente invention a donc notamment pour objet une composition comprenant un ou plusieurs peroxydes organiques dans une teneur de 20 à 70 % en poids, un ou plusieurs émulsifiants, éventuellement un ou plusieurs agents antigels, de l'eau oxygénée et de l'eau.

La composition selon l'invention présente ainsi l'avantage de poser moins de problèmes de sécurité, en particulier en termes sanitaires, pour les opérateurs que les émulsions aqueuses de peroxydes organiques classiquement mises en oeuvre lors de la synthèse de polymères obtenus à partir de monomères à insaturation éthylénique.

En effet, la composition selon l'invention génère moins de composés organiques volatils (COV) que les émulsions aqueuses de peroxyde organique classiquement utilisées dans l'art antérieur, ainsi qu'une quantité réduite de molécules organiques dans les effluents aqueux du procédé de polymérisation.

Par ailleurs, la composition selon l'invention présente également l'avantage d'être stable et homogène pendant une période pouvant être d'un mois à une température strictement inférieure à 0°C, de préférence inférieure à -5°C, plus préférentiellement inférieure à -10°C.

De plus, la composition selon l'invention présente une viscosité faible ce qui autorise un temps d'écoulement court ce qui permet de faciliter les étapes de déchargement de l'émulsion dans des silos intermédiaires de stockage, de pompage et d'introduction de l'émulsion de peroxyde organique dans un réacteur de polymérisation.

Par ailleurs, la composition selon l'invention peut présenter une taille moyenne de gouttelettes adaptées pour l'application. Ainsi la composition selon l'invention peut donc être transportée et stockée en sécurité dans des unités de production de polymères et conduire à des matériaux polymériques de bonne qualité.

L'invention a également pour objet l'utilisation d'une composition telle que définie précédemment pour la polymérisation ou la copolymérisation d'un ou plusieurs monomères éthyléniquement insaturés, en particulier un ou plusieurs monomères vinyliques, de préférence halogénés, et plus préférentiellement le chlorure de vinyle.

La composition selon l'invention peut donc être utilisée en tant qu'initiateurs de polymérisation pour la synthèse de polymères ou de copolymères obtenus à partir d'un ou plusieurs monomères éthyléniquement insaturés.

Ainsi la composition est compatible avec la polymérisation ou la copolymérisation de monomères éthyléniquement insaturés, de préférence de monomères vinyliques, plus préférentiellement de monomères vinyliques halogénés.

D'autres caractéristiques et avantages de l'invention apparaîtront plus clairement à la lecture de la description et des exemples qui suivent.

Dans ce qui va suivre, et à moins d'une autre indication, les bornes d'un domaine de valeurs sont comprises dans ce domaine.

L'expression « au moins un » est équivalente à l'expression « un ou plusieurs ».

### Composition

La composition selon l'invention comprend 20 à 70 % en poids d'un ou plusieurs peroxydes organiques.

De préférence, le ou les peroxydes organiques est ou sont choisis dans le groupe constitué par les peroxydicarbonates, les peroxyesters, les peroxydes de diacyle, les peroxykétals, les monoperoxycarbonates, les peroxydes de dialkyle et leurs mélanges.

Les peroxydes organiques peuvent être des peroxydicarbonates, de préférence choisis dans le groupe constitué par le peroxydicarbonate de di-sec-butyl, le peroxydicarbonate de dibutyl, le peroxydicarbonate de diisopropyl, le peroxydicarbonate de bis(3-methoxybutyl), le peroxydicarbonate de bis(isobutyl), le peroxydicarbonate de dineopentyle, le peroxydicarbonate de bis[2-(2-méthoxyéthoxy)éthyl], le peroxydicarbonate de bis (3-methoxy-3-méthylbutyl), le peroxydicarbonate de bis(2-ethoxyéthyl), le peroxydicarbonate de di(2-éthylhexyl), le peroxydicarbonate de bis(1-méthylheptyl), et leurs mélanges.

De préférence, le peroxydicarbonate est choisi dans le groupe constitué par le peroxydicarbonate de di(2-éthylhexyl), le peroxydicarbonate de di-sec-butyl et leur mélange.

Les peroxydes organiques peuvent être aussi des peroxyesters, de préférence choisis dans le groupe constitué par le tert-amyl peroxypivalate, le tert-butyl peroxypivalate, le tert- butyl peroxy isobutyrate, l'α-cumyl peroxyneodécanoate, α-cumyl peroxyneoheptanoate, le 2,4,4 triméthylpenty1-2- peroxyneodécanoate, le tert-butyl peroxyneoheptanoate, le 2,5-diméthyl-2,5 di (2-éthylhexanoyl peroxy) hexane, le tert-amyl peroxy 2-éthylhexanoate, le tertbutyl peroxy 2-éthylhexanoate, le -1,1,3,3 tétraméthyl butyl-peroxy-2 éthylhexanoate, le tert-amyl peroxyneodecanoate, le tert-butyl peroxyneodecanoate, 1,1,3,3 tetramethylbutylperoxypivalate, le 3-hydroxy-1,1-diméthylbutyl peroxyneodécanoate et leurs mélanges.

Les peroxydes organiques peuvent être des peroxydes de diacyle, de préférence choisis dans le groupe constitué par le peroxyde de diisobutyroyl, le peroxyde de di(3,5,5-trimethylhexanoy1), le peroxyde de di(2-ethylhexanoy1), ainsi que les peroxydes asymétriques tels que le peroxyde de isobutyroyl octanoyl, le peroxyde de isobutyroyl decanoyl, le peroxyde de isobutyroyl lauroyl, le peroxyde de 2- éthylbutanoyl decanoyl, et leurs mélanges.

De préférence, les peroxydes de diacyle sont choisis dans le groupe constitué par le peroxyde de diisobutyroyl, le peroxyde de di(3,5,5-trimethylhexanoy1, et leur mélange.

Les peroxydes organiques peuvent être des peroxykétals, de préférence choisis dans le groupe constitué par le 1,1-di(tert-amyl peroxy)cyclohexane, le 1,1-di(tert-butylperoxy)-3,3,5, triméthylcyclohexane), 2,2-di(4,4-di(tert-butylperoxy)cyclohexyle)propane, le 1,1-di(tert-butylperoxy)-cyclohexane, 3,6,9-triethyl-3,6,9-trimethyl-1,4,7-triperoxonane et leur mélange, de préférence est le 1,1-di(tert-amyl peroxy)cyclohexane.

Les peroxydes organiques peuvent être des monoperoxycarbonates, de préférence choisis dans le groupe constitué par le OO-tert-butyle O-isopropyle monoperoxycarbonate (TBIC), le OO-tert-amyl O-isopropyl monoperoxycarbonate (TA-IPC), le OO-tert-butyle-O-2-éthyle hexyle monoperoxycarbonate (TBEC) et le OO-tert-amyl-O-2ethyle hexyle monoperoxycarbonate.

Les peroxydes organiques peuvent être des peroxydes de dialkyle de préférence choisis dans le groupe constitué par le 2,5-dimethyl 2,5-di(tert-butylperoxy)-hexane, le peroxyde de tert-butyl cumyl, le peroxyde de di-tert-amyl, le peroxyde de di-tert-butyl et des mélanges de ceux-ci

De préférence, les peroxydes organiques sont choisis dans le groupe constitué par les peroxydicarbonates, les peroxyesters, peroxydes de diacyle et leurs mélanges.

De préférence, les peroxydes organiques sont choisis dans le groupe constitué par le peroxydicarbonate de di(2-éthylhexyl), par exemple vendu sous la dénomination commerciale Luperox ^{®} 223, le peroxydicarbonate de di-sec-butyl, par exemple vendu sous la dénomination commerciale Luperox ^{®} 225, et le tert-butyl peroxypivalate, par exemple vendu sous la dénomination commerciale Luperox ^{®} 11.

De préférence, les peroxydes organiques sont des peroxydicarbonates, de préférence le peroxydicarbonate de di(2-éthylhexyl), le peroxydicarbonate de di-sec-butyl et leur mélange, plus préférentiellement le peroxydicarbonate de di(2-éthylhexyl).

Les peroxydes organiques ont avantageusement une température de demi-vie à une heure inférieure à 90°C.

De plus, les peroxydes organiques ont avantageusement une température de stockage inférieure à 0°C.

Les peroxydes organiques sont avantageusement liquides à la température de stockage, de préférence à une température de stockage inférieure à 0°C, mesurée à la pression atmosphérique.

Les peroxydes organiques sont présents dans une teneur allant de 20 à 70 % en poids, de préférence dans une teneur allant de 40 à 60% en poids, et encore de préférence de 45 à 60%, par rapport au poids total de la composition.

La composition comprend outre un ou plusieurs agents émulsifiants.

De préférence, l'agent émulsifiant peut être un agent colloïde protecteur, en particulier choisi dans le groupe constitué par : un acétate de polyvinyle partiellement hydrolysé (PVA), une polyvinylpyrollidone, un polyacrylate, une gomme de xanthane, une cellulose ou un dérivé de celle-ci, en particulier une méthylcellulose, une carboxyméthylcellulose, et un amidon ou un dérivé de celle-ci, et des mélanges de ceux-ci, encore préférentiellement est choisi dans le groupe constitué par un acétate de polyvinyle partiellement hydrolysé (PVA), une gomme de xanthane, une méthylcellulose, une carboxyméthylcellulose et des mélanges de ceux-ci, encore préférentiellement est un acétate de polyvinyle partiellement hydrolysé (PVA).

De préférence, le polyvinyl acétate partiellement hydrolysé présente un degré d'hydrolyse de 50 à 75%/mol.

De préférence, l'agent émulsifiant peut également être un tensioactif non ionique et/ou un tensioactif ionique.

De préférence, l'agent émulsifiant est un tensioactif non ionique choisi de préférence dans le groupe constitué par les alcools gras oxyalkylénés (ou alcoxylés), les acides gras alcoxylés, les huiles végétales ou animales (hydrogénées ou non) oxyalkylénés (ou alcoxylés) les esters de sorbitant alcoxylés ou non, et leurs mélanges.

De préférence, le ou les agents émulsifiants sont choisis dans le groupe consistant en :
- un tensioactif non ionique, de préférence choisi dans le groupe constitué par les alcools gras oxyalkylénés, les acides gras alcoxylés, les huiles végétales ou animales (hydrogénées ou non) oxyalkylénés (ou alcoxylés) les esters de sorbitant alcoxylés ou non et leurs mélanges,
- un agent colloïde protecteur, en particulier un acétate de polyvinyle partiellement hydrolysé (PVA), et
- des mélanges de ceux-ci.

Dans un mode de réalisation particulièrement préféré, l'agent émulsifiant est un mélange d'agent colloïde protecteur, en particulier un acétate de polyvinyle partiellement hydrolysé, et d'un tensioactif non ionique.

Les motifs oxyalkylénés sont plus particulièrement des motifs oxyéthylénés (i.e. des groupes d'oxyde d'éthylène), oxypropylénés (i.e. des groupes d'oxyde de propylène), ou leur combinaison, de préférence oxyéthylénés ou une combinaison de motifs oxyéthylénés et de motifs oxypropylénés.

L'agent émulsifiant peut être présent dans la composition selon l'invention dans une teneur allant de 0,1 à 10% en poids, de préférence dans une teneur allant de 0,5 à 5% en poids, par rapport au poids total de la composition.

La composition peut comprendre en outre un ou plusieurs agents antigels.

De préférence, le ou les agents antigels sont solubles dans l'eau à la température de stockage.

Par « soluble dans l'eau à la température de stockage», on entend au sens de la présente invention, un composé ayant une solubilité dans l'eau mesurée à une température allant de -25 à 30°C à au moins 0,1 gramme/litre (g/l) (mesurée lorsque le composé introduit dans l'eau conduit à l'obtention d'une solution macroscopiquement homogène et transparente).

De préférence, le ou les agents antigels présentent un poids moléculaire inférieur à 160 g/mol, de préférence présentent un poids moléculaire inférieur à 100 g/mol.

De préférence, le ou les agents antigels sont choisis préférentiellement dans le groupe constitué par les monoalcools, diols et triols.

De préférence, l'agent antigel est choisi dans le groupe constitué par les alcools en C₁-C₆, notamment en C₂-C₆.

De préférence, l'agent antigel est choisi dans le groupe constitué par les alcools en C₁-C₆, préférentiellement choisis dans le groupe constitué par le méthanol, l'éthanol, l'éthylène glycol, l'isopropanol, le n-propanol, le propane-1,2-diol, le propane-1,3-diol, le glycérol, le butan-1-ol, le butan-2-ol, le butan-1,3-diol, le diethylene glycol, le triethyleneglycol et le butan-1,4-diol et leurs mélanges, de préférence l'éthanol.

L'agent antigel est de préférence présent dans la composition selon l'invention dans une teneur inférieure à 25% en poids, de préférence inférieure à 15% en poids par rapport au poids total de la composition.

De préférence, la composition selon l'invention contient moins de 15% en poids d'éthanol par rapport au poids total de la composition.

La composition selon l'invention comprend de l'eau oxygénée.

De préférence, l'eau oxygénée est sous forme liquide.

De préférence, l'eau oxygénée est présente dans une teneur allant de 0,01 à 15% en poids, plus préférentiellement dans une teneur allant de 1 à 6% en poids, par rapport au poids total de la composition.

De préférence, lorsque la composition comprend au moins un antigel, le rapport pondéral entre la teneur totale en agent(s) antigel(s) et la teneur totale en eau oxygénée varie de 0,1 à 10, plus préférentiellement varie de 0,5 à 5.

La composition selon l'invention comprend en outre de l'eau, de préférence dans une teneur allant de 15 à 58,9% en poids, par rapport au poids total de la composition.

De préférence, la composition selon l'invention comprend :
- 20 à 70 % en poids d'un ou plusieurs peroxydes organiques choisis dans le groupe constitué par les peroxydicarbonates, les peroxyesters, les peroxydes de diacyle, les peroxykétals, les monoperoxycarbonates, les peroxydes de dialkyle et leurs mélanges,
- un ou plusieurs agents émulsifiants, de préférence choisis dans le groupe constitué par les tensioactifs non ioniques, les agents colloïdes protecteurs et des mélanges de ceux-ci,
- un ou plusieurs agents antigels ayant un poids moléculaire inférieur à 160 g/mol, de préférence un poids moléculaire inférieur à 100 g/mol, et soluble dans l'eau à température ambiante, préférentiellement choisi dans le groupe constitué par les alcools en C₁-C₆, notamment en C₂-C₆,

- de l'eau oxygénée, et
- de l'eau.

De préférence, la composition selon l'invention comprend :
- un ou plusieurs peroxydes organiques choisis dans le groupe constitué par les peroxydicarbonates, préférentiellement choisi dans le groupe constitué par le peroxydicarbonate de di(2-éthylhexyl), le peroxydicarbonate de di-sec-butyl et leur mélange,
- un ou plusieurs agents émulsifiants choisis dans le groupe constitué par les tensioactifs non ioniques, les agents colloïdes protecteurs et des mélanges de ceux-ci,
- un ou plusieurs agents antigels ayant un poids moléculaire inférieur à 160 g/mol, de préférence un poids moléculaire inférieur à 100 g/mol et soluble dans l'eau à température ambiante, préférentiellement choisi dans le groupe constitué par les mono- et di-alcools en C₁-C₆, notamment en C₂-C₆,
- de l'eau oxygénée, et
- de l'eau.

De préférence, la composition selon l'invention comprend :
- 20 à 70 % en poids d'un ou plusieurs peroxydes organiques choisis dans le groupe constitué par les peroxydicarbonates, préférentiellement le peroxydicarbonate de di(2-éthylhexyl),
- un ou plusieurs agents émulsifiants choisis dans le groupe constitué par les tensioactifs non ioniques, , les agents colloïdes protecteurs et des mélanges de ceux-ci
- un ou plusieurs agents antigels choisi dans le groupe constitué par les mono- et di-alcools en C₁-C₆, notamment en C₂-C₆, en particulier l'éthanol
- de l'eau oxygénée, et
- de l'eau.

La composition selon l'invention peut également comprendre un ou plusieurs additifs destinés à procurer à la composition finale des propriétés/caractéristiques particulières. Ces additifs seront idéalement présents pour la polymérisation ou copolymérisation finale.

L'additif peut être choisi dans le groupe constitué par les antioxydants ; les agents de protection UV; les agents de mise en oeuvre, ayant pour fonction d'améliorer l'aspect final lors de sa mise en oeuvre, telles que les amides grasses, l'acide stéarique et ses sels, l'éthylène bis-stéaramide ou les polymères fluorés ; les agents antibuées ; les agents anti-bloquants tels que la silice ou le talc ; les charges telles que le carbonate de calcium et les nanocharges comme par exemple les argiles ; les agents de couplage tels que les silanes ; les agents réticulants comme les peroxydes différents des peroxydes organiques selon l'invention ; les agents antistatiques ; les agents nucléants ; les pigments ; les colorants ; les plastifiants ; les fluidifiants et les additifs retardateurs de flamme tels que les hydroxydes d'aluminium ou de magnésium.

La composition selon l'invention peut éventuellement contenir un ou plusieurs additifs incluant les agents ajusteurs de pH tels que les tampons phosphate et citrate, les agents chélatants, des biocides par exemple des fongicides, des antiozonants, des antioxidants, des antidégradants, des agents gonflants et des agents de démoulage.

La composition selon l'invention peut également contenir des additifs habituellement utilisés pour stabiliser le peroxyde organique ou retarder sa décomposition tels que des phlegmatisants (isododécane, huile minérale etc...) ou des hydroperoxydes.

Ces additifs peuvent être ajoutés dans les quantités habituellement utilisées et connues de l'homme de l'art. Ces additifs sont généralement utilisés dans des teneurs comprises entre 10 ppm et 10 000 ppm en poids par rapport au poids de polymère final. Les plastifiants, les fluidifiants et les additifs retardateurs de flamme peuvent atteindre des quantités bien supérieures à 10 000 ppm.

### Préparation de la composition

La composition selon l'invention peut être préparée en dispersant au moins l'agent émulsifiant, éventuellement un ou plusieurs agents antigels, de l'eau oxygénée, et éventuellement un ou plusieurs additifs, dans de l'eau pour obtenir une phase aqueuse homogène puis en ajoutant un ou plusieurs peroxydes organiques à ladite phase aqueuse, le tout étant ensuite émulsionné au cours d'une étape d'émulsion.

Les étapes mentionnées ci-dessus peuvent être exécutées dans l'ordre particulier prescrit ou dans un ordre différent. Hormis les étapes successives particulières du procédé de préparation de la composition selon l'invention, la préparation de l'émulsion ne se distingue en rien des techniques et appareils bien connus de l'homme du métier.

La température à laquelle on prépare l'émulsion n'est pas critique mais elle doit être suffisamment réduite pour éviter un taux important de décomposition dont le résultat serait une perte du titre. La température choisie dépend du peroxyde organique.

De préférence, l'étape d'émulsion est réalisée à une température inférieure à 5°C (Celsius).

Par ailleurs, pour préparer les émulsions aqueuses, on utilise classiquement de l'eau désionisée ou de l'eau distillée.

De préférence, l'étape d'émulsion est réalisée avec un mélangeur à fort taux de cisaillement pour diviser et/ou homogénéiser au mieux le peroxyde dans la phase aqueuse. A titre d'exemple, on pourra citer des agitateurs à pales et à ancre à rotation mécanique, les agitateurs à hélice, c'est-à-dire un ou plusieurs agitateurs montés sur un arbre commun, les agitateurs à turbine, c'est-à-dire ceux comportant des chicanes fixes sur la cuve mélangeuse ou en position adjacente aux organes agitateurs. On peut également utiliser des broyeurs colloïdaux et des homogénéisateurs.

Selon une caractéristique de réalisation, le procédé selon l'invention est caractérisé en ce que l'on utilise un mélangeur ultrasonique ou un mélangeur rotor-stator. Suite à la préparation de l'émulsion, les étapes de pompage ou le transfert dans un autre récipient doivent être effectuées le plus rapidement possible. C'est pourquoi les émulsions de peroxyde présentent de préférence une viscosité faible.

De préférence, les émulsions de peroxydes organiques selon l'invention présentent une coulabilité ou temps d'écoulement mesuré par une technique de coupe consistométrique inférieure à 200 secondes, préférentiellement inférieure à 100 secondes (DIN 53211, diamètre de la coupe de viscosité 4 mm, Température de 5°C). Les étapes ultérieures de polymérisation ou de copolymérisation ne sont, dans le cadre de la présente invention, pas différentes de celle de l'art antérieur.

### Utilisation

La présente invention concerne aussi l'utilisation d'une composition telle que définie précédemment pour la polymérisation ou la copolymérisation d'un ou plusieurs monomères éthyléniquement insaturés, en particulier d'un ou plusieurs monomères vinyliques, de préférence halogénés, et plus préférentiellement de chlorure de vinyle.

A titre de monomères éthyléniquement insaturés, on peut citer les acrylates, les esters vinyliques, les monomères halogénure de vinyle, les éthers vinyliques, le butadiène, les composés vinyliques aromatiques tels que le styrène.

De préférence, les monomères éthyléniquement insaturés sont choisis dans le groupe constitué par les monomères halogénure de vinyle (i.e. monomères vinyliques halogénés), en particulier le chlorure de vinyle ou le fluorure de vinyle, et plus préférentiellement le chlorure de vinyle.

De préférence, la polymérisation ou copolymérisation est réalisée avec une suspension des monomères à polymériser.

La composition d'émulsion aqueuse selon l'invention peut aussi être utilisée dans des applications telles les réactions de modifications polymères, les réactions de réticulation, les réactions de polymérisation en masse et les procédés de cuisson comme utilisés dans les résines polyesters insaturés.

En particulier, la composition d'émulsion aqueuse selon l'invention peut aussi être utilisée pour modifier la rhéologie de polymères, en particulier du polypropylène.

### Polymère

Un autre objet de la présente divulgation se rapporte au polymère, de préférence un polymère vinylique, encore préférentiellement un polymère vinylique halogéné, obtenu par polymérisation ou copolymérisation d'au moins un monomère éthyléniquement insaturé, tel que défini précédemment, en présence de la composition selon l'invention telle que définie ci-avant.

De préférence, la divulgation a trait au poly(chlorure de vinyle) obtenu par polymérisation du chlorure de vinyle en présence de la composition selon l'invention, en particulier du mélange de peroxydes organiques, tels que définis ci-avant.

En particulier, la polymérisation du monomère chlorure de vinyle se produit en suspension, de préférence à une température d'initiation allant de 45°C à 70°C.

Les exemples suivants servent à illustrer l'invention sans toutefois présenter un caractère limitatif.

### EXEMPLES

### Exemple 1

Les compositions A1, A2, A3, A4, A5, A6 et C1 suivantes sont préparées selon le même mode opératoire.

La phase aqueuse contenant l'agent émulsifiant, à savoir le tensioactif non ionique, éventuellement l'agent antigel, l'eau oxygénée et l'eau est agitée entre 500 et 1000 tours par minute (tpm) et maintenue à -5°C (Celsius).

Les peroxydes organiques sont ajoutés progressivement dans le réacteur contenant ce mélange. L'agitation est maintenue pendant trois minutes à 2000 tpm. L'ensemble est ensuite fortement agité à l'aide d'un « Ultraturrax type S-25N 18G» pendant deux ou huit minutes à 9500 tpm ou 12500 tpm, puis sous agitation à l'aide d'une pâle à 1000 tpm pendant une minute. Chaque émulsion se fait sur 200 grammes au total.

### Tests réalisés :

Les mesures de temps d'écoulement sont réalisées à l'aide de coupes consistométriques selon la norme DIN 53211 (diamètre de la coupe de viscosité : 4 mm), bien connue de l'homme du métier. La mesure se fait sur 100 g d'émulsion après conditionnement à +5 °C. Les mesures de temps d'écoulement sont exprimées en secondes et la précision est de ±10 % de la valeur indiquée.

La taille moyenne des gouttelettes est déterminée par des moyens conventionnels en utilisant la technique de diffraction de la lumière.

Les mesures sont faites en utilisant un dispositif de Malvern Master Sizer 2000^{®} à température ambiante. La taille moyenne des gouttelettes est donnée avec une précision de ± 0,5 µm (micromètre).

### Compositions :

Les quantités des ingrédients ci-dessous sont indiquées en pourcentage en poids par rapport au poids total de la composition dans le tableau 1 ci-après :

**[Tableau 1]**

| | A1 | A2 | A3 | A4 | A5 | A6 | C1 |
|---|---|---|---|---|---|---|---|
| Ultraturrax | | | | | | | |
| Temps d'agitation (minutes) | 8 | 2 | 2 | 2 | 2 | 2 | 2 |
| Tours par minute | 12500 | 9500 | 9500 | 9500 | 9500 | 9500 | 9500 |
| Huile castor éthoxylée (Surfaline ^{®} OC23) | 0,9 | - | - | 0,9 | 0,9 | - | - |
| Tween^{®} 80 | | | | | | 0,8 | 0,8 |
| Span^{®} 80 | 1,1 | - | - | 1,1 | 0,4 | 0,8 | 0,8 |
| Alcotex (PVA) | - | 1,5 | 1,2 | - | - | - | - |
| Ethanol | - | 8,0 | - | - | 10,4 | - | - |
| 1,2, Propanediol | | | | | | 12 | 16,5 |
| Eau oxygénée | 10 | 6,9 | 15,0 | 11,4 | 5,9 | 6,6 | - |
| Peroxydicarbonate de di(2-éthylhexyl) (Luperox ^{®} 223) | 60,0 | 59,8 | 59,1 | 60,1 | 56,1 | - | - |
| t-butyl peroxypivalate (75% en poids Luperox ^{®} 11 + 25% en poids isododécane) | | | | | | 60 | 60 |
| Eau | Qsp 100 | Qsp 100 | Qsp 100 | Qsp 100 | Qsp 100 | Qsp 100 | Qsp 100 |

### Résultats :

### Au moment de la production des compositions

Les résultats de taille moyenne de gouttelettes, et de temps d'écoulement au moment de la production des compositions A1, A2, A3, A4, A5, A6 et C1 sont regroupés dans le tableau 2 ci-après :

**[Tableau 2]**

| | A1 | A2 | A3 | A4 | A5 | A6 | C1 |
|---|---|---|---|---|---|---|---|
| Taille moyenne de gouttelettes (µm) à T0 | 4,2 | 2,0 | 5,8 | 7,5 | 2,3 | 1,3 | 1,0 |
| Temps d'écoulement à T = +5°C (s) | 22 | 183 | 96 | 22 | 26 | 54 | 92 |

Les résultats montrent que les compositions selon l'invention (compositions A1, A2, A3, A4, A5 et A6) présentent une faible taille moyenne de gouttelettes, et ce, malgré la présente d'eau oxygénée dans l'émulsion.

### Stabilité des compositions testées

Les résultats de taille moyenne de gouttelettes déterminés sur une période de temps d'un mois à -20°C des compositions testées sont regroupés dans le tableau 3 ci-après :

**Tableau 3 :**

| | | A1 | A2 | A3 | A4 | A5 | A6 | C1 |
|---|---|---|---|---|---|---|---|---|
| T+1 mois | Taille moyenne de gouttelettes (µm) | 4,0 | 2,6 | 6,0 | 7.5 | 2.3 | 1,3 | 1,1 |

Les résultats montrent que les compositions selon l'invention (compositions A1, A2, A3, A4, A5 et A6), après un mois de stockage à -20°C, présentent une taille moyenne de gouttelettes quasiment inchangée par rapport à celles mesurées au moment de la production de la composition. Ces émulsions sont donc stables sur cette période et ce, malgré la présente d'eau oxygénée dans l'émulsion. Les émulsions selon l'invention permettent donc de réduire la quantité d'alcool présente dans l'émulsion, tout en maintenant une émulsion liquide stable à -20°C.

## Revendications

1. Composition comprenant :
- 20 à 70 % en poids d'un ou plusieurs peroxydes organiques,
- un ou plusieurs émulsifiants,
- éventuellement un ou plusieurs agents antigels,
- de l'eau oxygénée et
- de l'eau.

2. Composition selon la revendication 1, **caractérisée en ce que** les peroxydes organiques sont choisis dans le groupe constitué par les peroxydicarbonates, les peroxyesters, les peroxydes de diacyle, les peroxykétals, les monoperoxycarbonates, les peroxydes de dialkyle et leurs mélanges, de préférence choisis dans le groupe constitué par les peroxydicarbonates, les peroxyesters, peroxydes de diacyle et leurs mélanges, encore préférentiellement les peroxydicarbonates.

3. Composition selon la revendication 1 ou 2, **caractérisée en ce que** les peroxydes organiques sont des peroxydicarbonates choisis dans le groupe constitué par le peroxydicarbonate de di-sec-butyl, le peroxydicarbonate de dibutyl, le peroxydicarbonate de diisopropyl, le peroxydicarbonate de bis(3-methoxybutyl), le peroxydicarbonate de bis(isobutyl), le peroxydicarbonate de dineopentyle, le peroxydicarbonate de bis[2-(2-méthoxyéthoxy)éthyl], le peroxydicarbonate de bis (3-methoxy-3-méthylbutyl), le peroxydicarbonate de bis(2-ethoxyéthyl), le peroxydicarbonate de di(2-éthylhexyl), le peroxydicarbonate de bis(1-méthylheptyl), et leurs mélanges, de préférence choisis dans le groupe constitué par le peroxydicarbonate de di(2-éthylhexyl), le peroxydicarbonate de di-sec-butyl et leur mélange.

4. Composition selon l'une quelconque des revendications 1 à 3, **caractérisée en ce que** les peroxydes organiques sont des peroxyesters choisis dans le groupe constitué par le tert-amyl peroxypivalate, le tert-butyl peroxypivalate, le tert- butyl peroxy isobutyrate, l'α-cumyl peroxyneodécanoate, α-cumyl peroxyneoheptanoate, le 2,4,4 triméthylpenty1-2-peroxyneodécanoate, le tert-butyl peroxyneoheptanoate, le 2,5-diméthyl-2,5 di (2-éthylhexanoyl peroxy) hexane, le tert-amyl peroxy 2-éthylhexanoate, le tertbutyl peroxy 2-éthylhexanoate, le-1,1,3,3 tétraméthyl butyl-peroxy-2 éthylhexanoate, le tert-amyl peroxyneodecanoate, le tert-butyl peroxyneodecanoate, 1,1,3,3 tetramethylbutylperoxypivalate, 3-hydroxy-1,1-diméthylbutyl peroxyneodécanoate et leurs mélanges.

5. Composition selon l'une quelconque des revendications précédentes, **caractérisée en ce que** les peroxydes organiques sont des peroxydes de diacyle choisis dans le groupe constitué par le peroxyde de diisobutyroyl, le peroxyde de di(3,5,5-trimethylhexanoy1), le peroxyde de di(2-ethylhexanoy1), ainsi que les peroxydes asymétriques tels que le peroxyde de isobutyroyl octanoyl, le peroxyde de isobutyroyl decanoyl, le peroxyde de isobutyroyl lauroyl, le peroxyde de 2- éthylbutanoyl decanoyl, et leurs mélanges.

6. Composition selon l'une quelconque des revendications précédentes, **caractérisée en ce que** le ou les agents émulsifiants sont choisis dans le groupe consistant en :
- un tensioactif non ionique, de préférence choisi dans le groupe constitué par les alcools gras oxyalkylénés, les acides gras alcoxylés, les huiles végétales ou animales (hydrogénées ou non) oxyalkylénés (ou alcoxylés) les esters de sorbitant alcoxylés ou non et leurs mélanges
- un agent colloïde protecteur choisi dans le groupe constitué par : un acétate de polyvinyle partiellement hydrolysé, une polyvinylpyrollidone, un polyacrylate, une gomme de xanthane, une cellulose ou un dérivé de celle-ci, en particulier une méthylcellulose, une carboxyméthylcellulose, et un amidon ou un dérivé de celle-ci, et des mélanges de ceux-ci, encore préférentiellement est choisi dans le groupe constitué par un acétate de polyvinyle partiellement hydrolysé, une gomme de xanthane, une méthylcellulose, une carboxyméthylcellulose et des mélanges de ceux-ci, encore préférentiellement est un acétate de polyvinyle partiellement hydrolysé.- des mélanges de ceux-ci.

7. Composition selon l'une quelconque des revendications précédentes, **caractérisée en ce que** le ou les agents antigels présentent un poids moléculaire inférieur à 160 g/mol, de préférence un poids moléculaire inférieur à 100 g/mol.

8. Composition selon l'une quelconque des revendications précédentes, **caractérisée en ce que** le ou les agents antigels sont choisis dans le groupe constitué par les alcools en C₁-C₆, de préférence choisis dans le groupe constitué par le méthanol, l'éthanol, l'éthylène glycol, l'isopropanol, le n-propanol, le propane-1,2-diol, le propane-1,3-diol, le glycérol, le butan-1-ol, le butan-2-ol, le butan-1,3-diol et le butan-1,4-diol et leurs mélanges.

9. Composition selon l'une quelconque des revendications précédentes, dans laquelle l'eau oxygénée est présente dans une teneur allant de 0,01 à 15% en poids, plus préférentiellement dans une teneur allant de 1 à 6% en poids, par rapport au poids total de la composition.

10. Composition selon l'une quelconque des revendications précédentes, comprenant au moins un antigel, le rapport pondéral entre la teneur totale en agent(s) antigel(s) et la teneur totale en eau oxygénée allant de préférence de 0,1 à 10, plus préférentiellement varie de 0,5 à 5.

11. Utilisation de la composition telle que définie selon l'une quelconque des revendications précédentes pour la polymérisation ou la copolymérisation d'un ou plusieurs monomères éthyléniquement insaturés.

12. Utilisation selon la revendication 11, **caractérisée en ce que** les monomères éthyléniquement insaturés sont des monomères vinyliques halogénés, de préférence le chlorure de vinyle.

## Patentansprüche

1. Zusammensetzung, umfassend:
- 20 bis 70 Gew.-% eines oder mehrerer organischer Peroxide,
- einen oder mehrere Emulgatoren,
- gegebenenfalls ein oder mehrere Gefrierschutzmittel,
- Wasserstoffperoxid und
- Wasser.

2. Zusammensetzung nach Anspruch 1, **dadurch gekennzeichnet, dass** die organischen Peroxide aus der Gruppe bestehend aus Peroxydicarbonaten, Peroxyestern, Diacylperoxiden, Peroxyketalen, Monoperoxycarbonaten, Dialkylperoxiden und Mischungen davon ausgewählt sind und vorzugsweise aus der Gruppe bestehend aus Peroxydicarbonaten, Peroxyestern, Diacylperoxiden und Mischungen davon, noch weiter bevorzugt Peroxydicarbonaten, ausgewählt sind.

3. Zusammensetzung nach Anspruch 1 oder 2, **dadurch gekennzeichnet, dass** es sich bei den organischen Peroxiden um Peroxydicarbonate handelt, die aus der Gruppe bestehend aus Ddi-sec-butylperoxydicarbonat, Dibutylperoxydicarbonat, Diisopropylperoxydicarbonat, Bis(3-methoxybutyl)peroxydicarbonat, Bis(isobutyl)peroxydicarbonat, Dineopentylperoxydicarbonat, Bis[2-(2-methoxyethoxy)ethyl]-peroxydicarbonat, Bis(3-methoxy-3-methylbutyl)-peroxydicarbonat, Bis(2-ethoxyethyl)peroxy-dicarbonat, Di(2-ethylhexyl)peroxydicarbonat, Bis(1-methylheptyl)peroxydicarbonat und Mischungen davon ausgewählt ist und vorzugsweise aus der Gruppe bestehend aus Di(2-ethylhexyl)peroxydicarbonat, Di-sec-butylperoxydicarbonat und Mischungen davon ausgewählt ist.

4. Zusammensetzung nach einem der Ansprüche 1 bis 3, **dadurch gekennzeichnet, dass** es sich bei den organischen Peroxiden um Peroxyester handelt, die aus der Gruppe bestehend aus tert-Amylperoxypivalat, tert-Butylperoxypivalat, tert-Butylperoxyisobutyrat, α-Cumylperoxyneodecanoat, α-Cumylperoxyneoheptanoat, 2,4,4-Trimethylpentyl-2-peroxyneodecanoat, tert-Butylperoxyneoheptanoat, 2,5-Dimethyl-2,5-di(2-ethylhexanoylperoxy)hexan, tert-Amylperoxy-2-ethylhexanoat, tert-Butylperoxy-2-ethylhexanoat, 1,1,3,3-Tetramethylbutylperoxy-2-ethylhexanoat, tert-Amylperoxyneodecanoat, tert-Butylperoxyneodecanoat, 1,1,3,3-Tetramethylbutylperoxypivalat, 3-Hydroxy-1,1-dimethylbutylperoxy-neodecanoat und Mischungen davon ausgewählt sind.

5. Zusammensetzung nach einem der vorhergehenden Ansprüche, **dadurch gekennzeichnet, dass** es sich bei den organischen Peroxiden um Diacylperoxide handelt, die aus der Gruppe bestehend aus Diisobutyroylperoxid, Di(3,5,5-trimethylhexanoyl)-peroxid, Di(2-ethylhexanoyl)peroxid sowie asymmetrischen Peroxiden wie Isobutyroyloctanoylperoxid, Isobutyroyldecanoylperoxid, Isobutyroyllauroylperoxid, 2-Ethylbutanoyldecanoylperoxid und Mischungen davon ausgewählt sind.

6. Zusammensetzung nach einem der vorhergehenden Ansprüche, **dadurch gekennzeichnet, dass** der Emulgator bzw. die Emulgatoren ausgewählt ist bzw. sind aus der Gruppe bestehend aus:
- einem nichtionischen Tensid, vorzugsweise ausgewählt aus der Gruppe bestehend aus oxyalkylenierten Fettalkoholen, alkoxylierten Fettsäuren, oxyalkylenierten (oder alkoxylierten) pflanzlichen oder tierischen Ölen (die gegebenenfalls hydriert sind), gegebenenfalls alkoxylierten Sorbitanestern und Mischungen davon,
- einem Schutzkolloidmittel, ausgewählt aus der Gruppe bestehend aus: einem teilhydrolysierten Polyvinylacetat, einem Polyvinylpyrrolidon, einem Polyacrylat, einem Xanthangummi, einer Cellulose oder einem Derivat davon, insbesondere einer Methylcellulose, einer Carboxymethylcellulose, und einer Stärke oder einem Derivat davon und Mischungen davon, noch weiter bevorzugt ausgewählt aus der Gruppe bestehend aus einem teilhydrolysierten Polyvinylacetat, einem Xanthangummi, einer Methylcellulose, einer Carboxymethylcellulose und Mischungen davon, bei dem es sich weiter bevorzugt um ein teilhydrolysiertes Polyvinylacetat handelt.
- Mischungen davon.

7. Zusammensetzung nach einem der vorhergehenden Ansprüche, **dadurch gekennzeichnet, dass** das Gefrierschutzmittel bzw. die Gefrierschutzmittel ein Molekulargewicht von weniger als 160 g/mol, vorzugsweise ein Molekulargewicht von weniger als 100 g/mol, aufweist bzw. aufweisen.

8. Zusammensetzung nach einem der vorhergehenden Ansprüche, **dadurch gekennzeichnet, dass** das Gefrierschutzmittel bzw. die Gefrierschutzmittel aus der Gruppe bestehend aus C₁-C₆-Alkoholen ausgewählt sind, insbesondere aus der Gruppe bestehend aus Methanol, Ethanol, Ethylenglykol, Isopropanol, n-Propanol, Propan-1,2-diol, Propan-1,3-diol, Glycerin, Butan-1-ol, Butan-2-ol, Butan-1,3-diol und Butan-1,4-diol und Mischungen davon ausgewählt sind.

9. Zusammensetzung nach einem der vorhergehenden Ansprüche, wobei das Wasserstoffperoxid in einem Gehalt im Bereich von 0,01 bis 15 Gew.-%, weiter bevorzugt in einem Gehalt im Bereich von 1 bis 6 Gew.-%, bezogen auf das Gesamtgewicht der Zusammensetzung, vorliegt.

10. Zusammensetzung nach einem der vorhergehenden Ansprüche, die mindestens ein Gefrierschutzmittel umfasst, wobei das Gewichtsverhältnis zwischen dem Gesamtgehalt an Gefrierschutzmittel(n) und dem Gesamtgehalt an Wasserstoffperoxid vorzugsweise im Bereich von 0,1 bis 10 und weiter bevorzugt im Bereich von 0,5 bis 5 liegt.

11. Verwendung der Zusammensetzung gemäß einem der vorhergehenden Ansprüche zur Polymerisation oder Copolymerisation von einem oder mehreren ethylenisch ungesättigten Monomeren.

12. Verwendung nach Anspruch 12, **dadurch gekennzeichnet, dass** es sich bei den ethylenisch ungesättigten Monomeren um halogenierte Vinylmonomere, vorzugsweise Vinylchlorid, handelt.

## Claims

1. A composition comprising:
- 20% to 70% by weight of one or more organic peroxides;
- one or more emulsifiers,
- optionally one or more antifreeze agents,
- hydrogen peroxide and
- water.

2. The composition as claimed in claim 1, **characterized in that** the organic peroxides are chosen from the group consisting of peroxydicarbonates, peroxyesters, diacyl peroxides, peroxyketals, monoperoxycarbonates, dialkyl peroxides and mixtures thereof, preferably chosen from the group consisting of peroxydicarbonates, peroxyesters, diacyl peroxides and mixtures thereof, more preferentially peroxydicarbonates.

3. The composition as claimed in claim 1 or 2, **characterized in that** the organic peroxides are peroxydicarbonates chosen from the group consisting of di-sec-butyl peroxydicarbonate, dibutyl peroxydicarbonate, diisopropyl peroxydicarbonate, bis(3-methoxybutyl) peroxydicarbonate, bis(isobutyl) peroxydicarbonate, dineopentyl peroxydicarbonate, bis[2-(2-methoxyethoxy)ethyl] peroxydicarbonate, bis(3-methoxy-3-methylbutyl) peroxydicarbonate , bis(2-ethoxyethyl) peroxydicarbonate, di(2-ethylhexyl) peroxydicarbonate, bis(1-methylheptyl) peroxydicarbonate, and mixtures thereof, preferably chosen from the group consisting of di(2-ethylhexyl) peroxydicarbonate, ethylhexyl), di-sec-butyl peroxydicarbonate and mixtures thereof.

4. The composition as claimed in any one of claims 1 to 3, **characterized in that** the organic peroxides are peroxyesters chosen from the group consisting of tert-amyl peroxypivalate, tert-butyl peroxypivalate, tert-butyl peroxyisobutyrate, α-cumyl peroxyneodecanoate, α-cumyl peroxyneoheptanoate, 2,4,4-trimethylpentyl-2-peroxyneodecanoate, tert-butyl peroxyneoheptanoate, 2,5-dimethyl-2,5-di(2-ethylhexanoylperoxy)hexane, tert-amyl peroxy-2-ethylhexanoate, tert-butyl peroxy-2-ethylhexanoate, 1,1,3,3-tetramethylbutyl peroxy-2-ethylhexanoate, tert-amyl peroxyneodecanoate, tert-butyl peroxyneodecanoate, 1,1,3,3-tetramethylbutyl peroxypivalate, 3-hydroxy-1,1-dimethylbutyl peroxyneodecanoate and mixtures thereof.

5. The composition as claimed in any one of the preceding claims, **characterized in that** the organic peroxides are diacyl peroxides chosen from the group consisting of diisobutyroyl peroxide, di(3,5,5-trimethylhexanoyl) peroxide, di(2-ethylhexanoyl) peroxide, and also asymmetric peroxides such as isobutyroyl octanoyl peroxide, isobutyroyl decanoyl peroxide, isobutyroyl lauroyl peroxide, 2-ethylbutanoyl decanoyl peroxide, and mixtures thereof.

6. The composition as claimed in any one of the preceding claims, **characterized in that** the emulsifier(s) is/are chosen from the group consisting of:
- a nonionic surfactant, preferably chosen from the group consisting of oxyalkylenated fatty alcohols, alkoxylated fatty acids, oxyalkylenated (or alkoxylated) plant or animal oils (hydrogenated or not), sorbitan esters (alkoxylated or not), and mixtures thereof,
- a protective colloid agent, chosen from the group consisting of: a partially hydrolyzed polyvinyl acetate, a polyvinylpyrrolidone, a polyacrylate, a xanthan gum, a cellulose or a derivative thereof, in particular a methyl cellulose, a carboxymethyl cellulose, and a starch or a derivative thereof, and mixtures thereof, more preferentially is chosen from the group consisting of a partially hydrolyzed polyvinyl acetate, a xanthan gum, a methyl cellulose, a carboxymethyl cellulose and mixtures thereof, more preferentially is a partially hydrolyzed polyvinyl acetate, - mixtures thereof.

7. The composition as claimed in any one of the preceding claims, **characterized in that** the antifreeze agent(s) has/have a molecular weight of less than 160 g/mol, preferably a molecular weight of less than 100 g/mol.

8. The composition as claimed in any one of the preceding claims, **characterized in that** the antifreeze agent(s) is/are chosen from the group consisting of C₁-C₆ alcohols, preferably chosen from the group consisting of methanol, ethanol, ethylene glycol, isopropanol, n-propanol, propane-1,2-diol, propane-1,3-diol, glycerol, butan-1-ol, butan-2-ol, butane-1,3-diol and butane-1,4-diol and mixtures thereof.

9. The composition as claimed in any one of the preceding claims, wherein the hydrogen peroxide is present in a content ranging from 0.01% to 15% by weight, more preferentially in a content ranging from 1% to 6% by weight, relative to the total weight of the composition.

10. The composition as claimed in any one of the preceding claims, comprising at least one antifreeze agent, the weight ratio between the total content of antifreeze agent(s) and the total content of hydrogen peroxide preferably ranging from 0.1 to 10, more preferentially ranges from 0.5 to 5.

11. The use of the composition as defined in any one of the preceding claims for the polymerization or copolymerization of one or more ethylenically unsaturated monomers.

12. The use as claimed in claim 11, **characterized in that** the ethylenically unsaturated monomers are halogenated vinyl monomers, preferably vinyl chloride.
